Europäisches Patentamt

European Patent Office

Office européen des brevets

(19)

(11) EP 0 898 148 A2

(12) **EUROPÄISCHE PATENTANMELDUNG**

(43) Veröffentlichungstag:
24.02.1999 Patentblatt 1999/08

(51) Int. Cl.⁶: G01B 11/06

(21) Anmeldenummer: 98114954.5

(22) Anmeldetag: 08.08.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 20.08.1997 DE 19736138
26.02.1998 EP 98103365

(71) Anmelder:
DAIMLER-BENZ AKTIENGESELLSCHAFT
70567 Stuttgart (DE)

(72) Erfinder:
Griesinger, Manfred, Dr.
71229 Leonberg (DE)

(54) **Verfahren zur Bestimmung des Zustands einer Fahrbahnoberfläche**

(57) Die Erfindung bezieht sich auf ein Verfahren zur Bestimmung des Zustands einer Fahrbahnoberfläche, bei dem auf die Fahrbahnoberfläche Licht eingestrahlt wird, das zwei Lichtanteile aus Wellenlängenbereichen ohne bzw. mit signifikanter Absorption durch Wasser/Eis beinhaltet, und bei dem das rückgestreute Licht erfaßt und spektral ausgewertet wird.

Erfindungsgemäß enthält der erste Lichtanteil Licht mehrerer unterschiedlicher Wellenlängen und die spektrale Auswertung beinhaltet die Ermittlung einer Näherungs-Referenzkurve für den Spektralverlauf des rückgestreuten Lichtes bei trockener Fahrbahn anhand der Spektraldaten des Rückstreulichtanteils im Wellenlängenbereich ohne signifikante Absorption und die Ermittlung der Differenz zwischen den Spektraldaten des Rückstreulichtanteils im anderen Wellenlängenbereich und den entsprechenden Daten der Näherungs-Referenzkurve für wenigstens eine Wellenlänge.

Verwendung z.B. zur laufenden qualitativen und quantitativen Bestimmung des Zustands der von einem Straßenfahrzeug befahrenen Fahrbahnoberfläche.

Fig. 1

EP 0 898 148 A2

Printed by Xerox (UK) Business Services
2.16.7/3.6

**Beschreibung**

Die Erfindung bezieht sich auf ein Verfahren zur Bestimmung des Zustands einer Fahrbahnoberfläche nach dem Oberbegriff des Anspruchs 1. Das Verfahren dient insbesondere dazu, das Vorhandensein von Wasser oder Eis auf der Fahrbahnoberfläche qualitativ und vorzugsweise auch quantitativ zu erfassen und kann von einer in einem Fahrzeug montierten Vorrichtung durchgeführt werden. Dazu werden bei einem solchen Verfahren allgemein wenigstens eine Lichtwellenlänge ohne und eine Lichtwellenlange mit signifikanter Absorption durch Wasser oder Eis bzw. Schnee in ihrem Rückstreuverhalten verglichen. Mit der Bezeichnung "ohne signifikante Absorption" ist dabei gemeint, daß zwar eventuell eine gewisse geringe Absorption vorhanden sein kann, diese jedoch jedenfalls deutlich geringer ist als im Wellenlängenbereich mit signifikanter Absorption.

Ein Verfahren von im wesentlichen dieser Art ist in der Offenlegungsschrift DE 41 33 359 A1 beschrieben. Mit dem dortigen Verfahren soll die Dicke einer Wasserschicht auf einer Fahrbahn berührungslos erfaßt werden können. Das auf die Fahrbahnoberfläche eingestrahlte Licht enthält dazu wenigstens zwei Wellenlängen aus dem nahen Infrarotbereich, die einer unterschiedlich starken Wasserabsorption unterliegen. Beispielsweise sind für einen empfindlichen Meßbereich eine Meßwellenlänge bei 1450nm und eine Vergleichswellenlänge bei 1190nm mit demgegenüber schwächerer Absorption und für einen unempfindlicheren Meßbereich eine Meßwellenlänge von 1190nm und eine demgegenüber noch schwächer absorbierte Vergleichswellenlänge von 1080nm gewählt. Unter der Annahme eines exponentiellen Absorptionsgesetzes und einer "grauen" Fahrbahnoberfläche, d.h. einer solchen, die alle Wellenlängen mit gleichem Anteil absorbiert, wird dann die Dicke einer auf der Fahrbahnoberfläche vorhandenen Wasserschicht bestimmt.

Die Annahme eines grauen Strahlers für die Fahrbahnoberfläche ist kritisch, denn Messungen an verschiedenen Fahrbahnbelägen haben ergeben, daß sie nur beschränkt gültig ist und z.B. manche Fahrbahnbeläge einen merklichen Anstieg ihres spektralen Reflexionsvermögens mit wachsender Wellenlänge zeigen. Ein Verfahren, bei dem das spektrale Rückstreuvermögen der jeweiligen Fahrbahnoberfläche berücksichtigt wird, ist aus der WO 96/26430 A1 bekannt. In einer linear approxierenden Näherung wird der Unter- bzw. Hintergrundeinfluss bestimmt, indem Referenzmessungen bei einer Wellenlänge unterhalb und einer Wellenlänge oberhalb des Messbereiches mit signifikanter Absorption durch Wasser/Eis vorgenommen werden. Durch diese beiden Referenzpunkte wird eine interpolierende Hintergrundsgerade (Referenz-Näherungkurve) gelegt. Weiterhin werden zwei Rückstreumessungen im Intervall zwischen den Referenzpunkten bei verschiednen Wellenlängen vorgenommen, welche die Wasser/Eis Information tragen. Durch Differenzbildung mit der Hintergrundsgeraden werden zwei entsprechende hintergrundbereinigte Messwerte abgeleiten, aus deren Summe, Differenz und Quotient auf die insgesamt vorhandene Feuchtigkeitsmenge, der Anteil bereits gefrorenen Materials und die Dicke der Wasser- bzw. Eisschicht geschlossen wird.

Bei dem beschriebenen Verfahren wird seitens der Anmelderin als nachteilig erachtet, daß aufgrund der insgesamt nur vier Stützpunkte keine hohe Genauigkeit erreichbar ist. Zum einen ist es wünschenswert, daß der Hintergrund genauer als nur in linearer Approximation erfaßt werden kann. Zum anderen läßt das beschriebene Verfahren keinen Ansatzpunkt erkennen, wie eine größere Anzahl von Messwerten in geeigneter Weise ausgewertet kann.

Zum weiteren Stand der Technik ist aus der Patentschrift DE 41 41 446 C1 ein Verfahren zur Messung der Dicke einer Schicht aus Wasser, Schnee oder Eis auf einer Fahrbahnoberfläche bekannt, das auf Laufzeitmessungen basiert.

Eine in der Offenlegungsschrift DE 30 23 444 A1 offenbarte Straßenzustandsermittlungseinrichtung arbeitet dergestalt, daß Infrarotstrahlung mit einer Wellenlänge, bei der das Reflexionsvermögen von Schnee geringer als dasjenige der trockenen Fahrbahnoberfläche ist, auf die Fahrbahnoberfläche eingestrahlt und das rückgestreute Licht mit Referenzsignalpegeln verglichen wird, die in bestimmter Weise vorab klassifizierten Zuständen der Fahrbahnoberfläche entsprechen.

Bei einem in der Patentschrift DE 38 41 333 C2 beschriebenen Verfahren wird zur Überwachung des Zustands einer Fahrbahn elektromagnetische Strahlung auf eine Lauffläche eines auf der Fahrbahn laufenden Rades eines Fahrzeugs eingestrahlt und die von dieser Lauffläche rückgestreute Strahlung analysiert.

In der Offenlegungsschrift DE 35 45 366 A1 ist eine Meßvorrichtung zur optischen Bestimmung der Dicke eines z.B. auf einer Metalloberfläche befindlichen Wasserfilms offenbart, bei dem auf den Wasserfilm Licht eingestrahlt wird, das einen Meßstrahl mit einer Wellenlänge, die vom Wasserfilm absorbiert wird, und einen Referenzstrahl mit einer Wellenlänge, die keiner Wasserabsorption unterworfen ist, beinhaltet. Die Wasserfilmdicke wird dann aus dem Verhältnis des den rückgestreuten Meßstrahlanteil repräsentierenden Meßsignalpegels zum den rückgestreuten Referenzstrahlanteil repräsentierenden Referenzsignalpegel multipliziert mit einem Temperaturkorrekturkoeffizienten ermittelt, wobei der Meßsignalpegel und der Referenzsignalpegel ggf. über mehrere Meßvorgänge gemittelt werden.

In der Offenlegungsschrift DE 40 40 842 A1 ist ein Infrarot-Mikrowellen-Sensorsystem zur Fahrbahnzustandserkennung, insbesondere zur Erkennung, ob die Fahrbahn trocken, naß oder vereist ist, beschrieben, das Netzwerke aus einem oder mehreren Komparatoren bzw. einem oder mehreren Gattern bzw. Flip-Flops zur Aufbereitung der Signale eines Infratrot- bzw. Mikrowellenempfängers enthält. Dabei wird die rückgestreute Intensität der elektromagnetischen Strahlung für zwei unterschiedliche Wellenlängen bzw. schmale Wellenlangenbänder ausgewertet und der Quotient dieser beiden Intensitäten bzw. von davon abgeleiteten Detektorsignalspannungen gebildet. Je nach Wert des ermittelten Quotienten wird auf eine trockene, nasse oder vereiste Fahrbahn geschlossen.

Der Erfindung liegt als technisches Problem die Bereitstellung eines Verfahrens der eingangs genannten Art zugrunde, mit dem der Zustand einer Fahrbahnoberfläche insbesondere hinsichtlich Vorhandenseins von Wasser, Eis und/oder Schnee mit relativ geringem Aufwand sehr zuverlässig und genau sowie unabhängig vom Fahrbahnbelag bestimmt werden kann.

Die Erfindung löst dieses Problem durch die Bereitstellung eines Verfahrens mit den Merkmalen des Anspruchs 1. Bei diesem Verfahren wird auf die Fahrbahnoberfläche Licht eingestrahlt, das mindestens einen ersten Lichtanteil aus einem ersten Wellenlängenbereich ohne signifikante Absorption durch Wasser oder Eis einschließlich Schnee und einen zweiten Lichtanteil aus einem zweiten Wellenlängenbereich mit signifikanter Absorption durch Wasser/Eis bzw. Schnee beinhaltet, wobei der erste Lichtanteil Licht mehrerer unterschiedlicher Wellenlängen enthält. Das von der Fahrbahnoberfläche rückgestreute Licht wird erfaßt und spektral ausgewertet. Dazu wird anhand mindestens der sich für einen ersten, zu den mehreren unterschiedlichen Wellenlängen des ersten Lichtanteils gehörigen Rückstreulichtanteil ergebenden Spektraldaten eine Näherungs-Referenzkurve ermittelt. Dies kann z.B. durch Bestimmung der Näherungs-Referenzkurve als einer parametrisierten Ausgleichskurve über die einzelnen Meßpunkte dieser Spektraldaten hinweg unter Verwendung einer üblichen Ausgleichsrechnung erfolgen. Die Näherungs-Referenzkurve erstreckt sich dabei über den gesamten Spektralverlauf des rückgestreuten Lichtes, also auch über den Wellenlängenbereich des zweiten Lichtanteils mit signifikanter Absorption durch Wasser/Eis, wobei sie ausgehend von den Meßpunkten im Wellenlängenbereich des ersten Lichtanteils ohne signifikante Wasser/Eis-Absorption in diesen Wellenlängenbereich des zweiten Lichtanteils hinein interpoliert bzw. extrapoliert ist.

Die Näherungs-Referenzkurve bildet auf diese Weise im Wellenlängenbereich des zweiten Lichtanteils eine Referenzkurve, die mindestens näherungsweise den Spektralverlauf des rückgestreuten Lichtes in diesem Wellenlängenbereich bei trockener Fahrbahnoberfläche wiedergibt. Bei nasser oder vereister Fahrbahn weichen folglich die Spektraldaten des rückgestreuten Lichtes im zweiten Wellenlängenbereich aufgrund einer entsprechenden Absorption des zweiten Lichtanteils durch das Wasser bzw. Eis merklich von der Näherungs-Referenzkurve ab. Abweichend von dem in der WO96/26430 A1 offenbarten Verfahren beinhaltet der zweite Lichtanteil Licht mehrerer unterschiedlicher Wellenlängen, wobei die Differenz zwischen den Spektraldaten des vom zweiten Lichtanteil stammenden Rückstreulichtanteils und den entsprechenden Daten der Näherungs-Referenzkurve nicht nur an ein oder zwei Punkten, sondern an möglichst vielen Punkten als Differenzkurve ermittelt wird. Aus dem Verlauf der Differenzkurve läßt sich der Zustand der Fahrbahnoberfläche vergleichsweise genau qualitativ und quantitativ bestimmen.

Je nach Anwendungsfall können zur Ermittlung der Näherungs-Referenzkurve nur die zum Wellenlängenbereich ohne signifikante Absorption durch Wasser oder Eis gehörigen Rückstreulichtanteile oder aber zusätzlich auch Rückstreulichtanteile herangezogen werden, die zum Wellenlängenbereich mit signifikanter Absorption durch Wasser/Eis gehören. In letzterem Fall können die Informationen über den Kurvenverlauf bei trockener Fahrbahn und den absorptionsbedingten Einbruch des Spektralverlaufs des rückgestreuten Lichts gemischt in den Empfängersignalen vorliegen und durch eine geeignete Auswertung voneinander getrennt und damit wiederum die Näherungs-Referenzkurve sowie die gesuchte Differenz zwischen dieser und dem Spektralverlauf bestimmt werden, der dem momentan abgetasteten Fahrbahnzustand entspricht. In seiner allgemeinen Form läßt sich das Verfahren dahingehend charakterisieren, daß mehrere Detektoren mit unterschiedlicher spektraler Empfindlichkeit und/oder mehrere Lichtquellen mit unterschiedlicher spektraler Emission verwendet werden, die jeweils einen eigenen Beitrag zum Rückstreulicht liefern, der sich als Integral der Wellenlänge über das Produkt der spektralen Empfindlichkeit des jeweiligen Detektors mit der jeweiligen spektralen Lichtintensität ergibt. Unter der gerechtfertigten Annahme, daß die Beiträge voneinander unabhängig sind, liefert jeder Beitrag eine Gleichung für ein Gleichungssystem, in welches als zu bestimmende Parameter diejenigen einer Parametrisierung der Näherungs-Referenzkurve sowie die gesuchte Differenz bzw. die Dicke einer Wasserschicht eingehen. Folglich werden bei Vorgabe einer Anzahl n von Parametern für die Näherungs-Referenzkurve eine Anzahl n+1 verschiedener Detektoren und/oder Lichtquellen benötigt, um das Gleichungssystem eindeutig lösen zu können. Die zugehörige Auswertung vereinfacht sich z.B. dann, wenn $\delta$-Funktionen für die spektrale Empfindlichkeit bzw. die spektrale Lichtintensität verwendet werden, d.h. wenn der Spektralverlauf punktuell bei verschiedenen diskreten Wellenlängen ausgewertet wird.

Bei einem nach Anspruch 2 weitergebildeten Verfahren liegen der ersten und der zweite Lichtanteil, die für die Auswertung des rückgestreuten Lichtes relevant sind, im Wellenlängenbereich zwischen etwa 800nm und etwa 1100nm. Dies hat u.a. den Vorteil, daß kostengünstige Silizium-Fotoempfänger als Rückstreulichtdetektoren eingesetzt werden können und keine speziellen Infrarot-Detektoren erforderlich sind. Ein weiterer Vorteil ist, daß bei dem ausgewählen Wellenlängenbereich die Eindringtiefe des Lichtes ausreichend groß ist, um die typischerweise auf Verkehrswegen stehenden Wasser- oder Eisschichten vollständig durchdringen zu können. Noch ein weiterer Vorteil ist, daß der Wellenlängenbereich ohne signifikante Wasser/Eis-Absorption sich aus zwei Teilbereichen unterhalb bzw. oberhalb des zweiten Wellenlängenbereichs zusammensetzt. Dadurch liegen beidseits des zweiten Wellenlängenbereichs Meßpunkte für die Ermittlung der Näherungs-Referenzkurve für den Spektralverlauf des rückgestrahlten Lichtes bei trockener Fahrbahn vor, wodurch dieser Spektralverlauf für den Wellenlängenbereich mit signifikanter Wasser/Eis-Absorption mit guter Genauigkeit interpoliert werden kann.

Bei einem nach Anspruch 3 weitergebildeten Verfahren besteht der Wellenlängenbereich ohne signifikante Wasser/Eis-Absorption aus zwei Teilbereichen unterhalb bzw. oberhalb des zweiten Wellenlängenbereichs. Dies hat den bereits oben erläuterten Vorteil.

Bei einer ersten Ausgestaltung der Analyse der Differenzkurve wird gemäß Anspruch 4 das Integral der Differenzkurve über den zweiten Wellenbereich ermittelt. Das resultierende, vorzugsweise normierte Integral bildet ein sehr genaues Maß für die Dicke eines ggf. auf der Fahrbahnoberfläche gebildeten Wasserfilms.

In einer weiteren Ausgestaltung wird gemäß Anspruch 5 der Schwerpunkt der Differenzkurve ermittelt. Es zeigt sich, daß durch diese Kenntnis der Schwerpunktlage entschieden werden kann, ob es sich bei einem auf der Fahrbahnoberfläche befindlichen Belag um eine wasser- oder eine Eis/Schnee-Schicht handelt.

Da mit abnehmender Temperatur der Wasser- bzw. Eisschicht sich die Schwerpunktslage der Differenzkurve zu größeren Wellenlängenlängen hin verschiebt, kann in der Weiterbildung nach Anspruch 6 aus der Verschiebung auf die Temperatur der Wasser- bzw. Eisschicht geschlossen werden. Die Kenntnis der Temperatur der Wasser- bzw. Eisschicht gibt neben der Kenntnis der Schichtdicke wertvolle Hinweise, um die Gefahr durch Eisglätte einschätzen zu können.

Die Möglichkeit in Zuge des Auswerteverfahrens auch die Wasser- bzw. Eistemperatur zu bestimmen, bietet den Vorteil, daß mit der Temperatur eine vorausschauende Warnung abgeleitet werden kann: Ist auf der Fahrbahn Wasser vorhanden und nähert sich diese Temperatur dem Gefrierpunkt, so kann in der Weiterbildung nach Anspruch 7 der Fahrer rechtzeitig davor gewarnt werden, daß mit überfrierender Nässe zu rechnen ist.

Für den Fall von Schnee sieht die Differenzkurve ähnlich aus wie für Eis, jedoch mit geringerer Amplitude, so daß in einer Weiterbildung nach Anspruch 8 eine zusätzliche Diskriminierung zwischen Eis und Schnee möglich ist.

Vorteilhafte Ausführungsformen der Erfindung sind in den Zeichnungen dargestellt und werden nachfolgend beschrieben. Hierbei zeigen:

Fig. 1 eine schematische Blockdiagrammdarstellung einer Vorrichtung zur Durchführung des erfindungsgemäßen Verfahrens zur Bestimmung des Zustands einer Fahrbahnoberfläche,

Fig. 2 ein Diagramm mit idealisiert dargestellten, von der Vorrichtung von Fig. 1 gewonnenen Rückstreulicht-Spektraldaten,

Fig. 3 ein Diagramm mit zwei durch die Vorrichtung von Fig. 1 gewonnenen Spektraldaten-Differenzkurven und

Fig. 4 der typische Verlauf der spektralen Intensität im Infrarotbereich von Umgebungslicht (UL) und von Licht einer Leichterzeugungseinheit (SL).

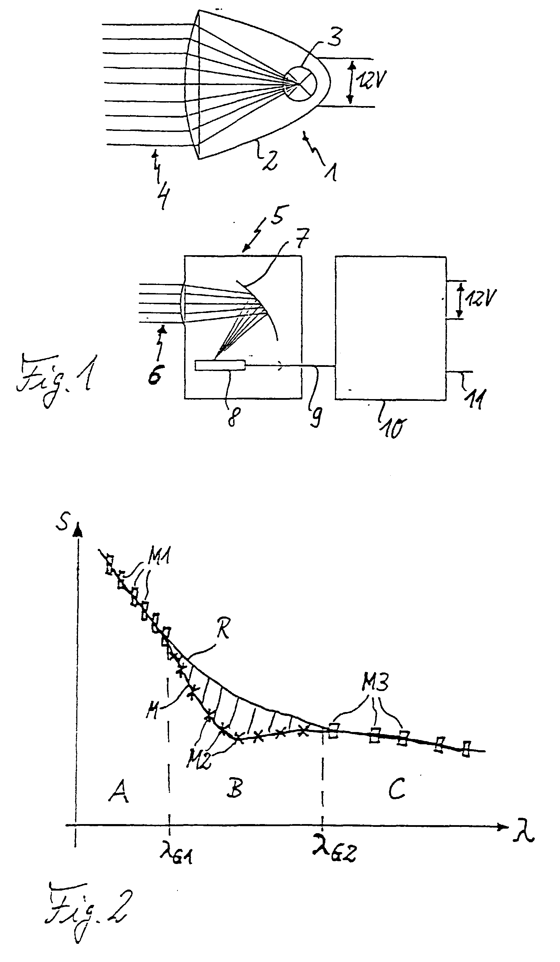

Fig. 1 zeigt eine zur Durchführung des erfindungsgemäßen Verfahrens geeignete Vorrichtung. Diese umfaßt eine Lichterzeugungseinheit 1 mit einer in Brennpunktnähe eines Reflektors 2 angeordneten Lichtquelle 3, die von einer 12V-Speisespannung, z.B. aus einem Bordnetz eines Kraftfahrzeuges, gespeist wird und breitbandig Licht in einem Wellenlängenbereich abgibt, der insbesondere den Bereich zwischen etwa 800nm und etwa 1150nm umfaßt. Das emittierte Licht verläßt den Reflektor 2 als ein Bündel 4 von im wesentlichen parallelen Lichtstrahlen, das auf eine nicht gezeigte Fahrbahnoberfläche eingestrahlt wird. Ein Empfänger 5 empfängt das zu ihm von der Fahrbahnoberfläche rückgestreute Licht 6 über eine Optik und/oder Lichtleiter, von wo es auf ein dispersives Element 7 des Empfängers 5 fällt und auf diese Weise spektral zerlegt auf einen Silizium-Photoempfänger in Form einer CCD-Sensorzeile 8 reflektiert wird. Das dispersive Element 7 kann z.B. von einem Beugungsgitter, einem Interferenzfilter oder einem Prisma gebildet sein. Das Ausgangssignal 9 der CCD-Zeile 8 wird einer Auswerteeinheit 10 zugeführt, die ebenfalls von der 12V-Speisespannung gespeist wird und an einen Datenbus 11, z.B. einen CAN-Bus, angeschlossen ist.

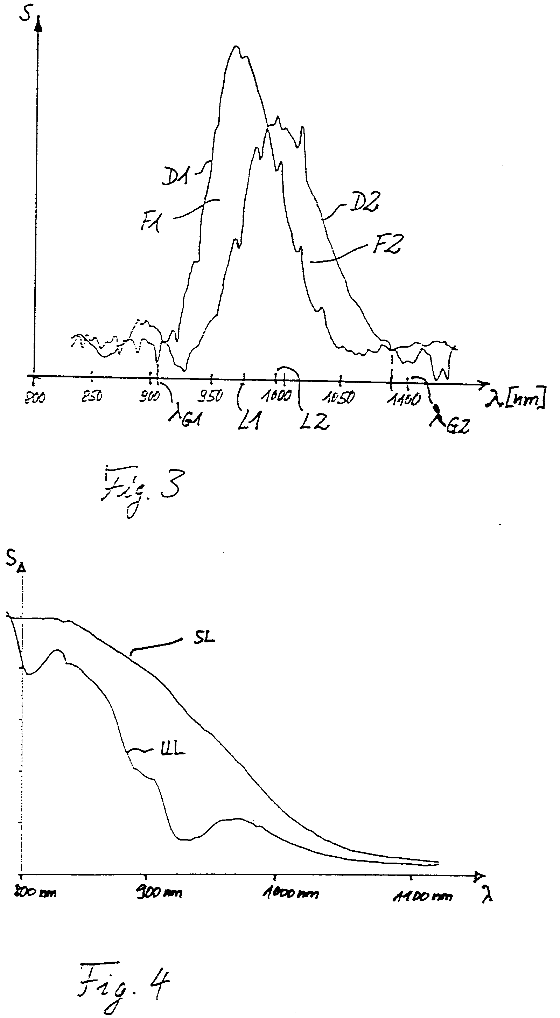

Die Auswerteeinheit 10 ist in geeigneter Weise zur Auswertung des Ausgangssignals 9 der CCD-Zeile 8 gemäß dem erfindungsgemäßen Verfahren ausgelegt. Im einzelnen ergibt sich dabei folgender Verfahrensablauf. Jedes Pixel, d.h. jede Abtast-Einheitszelle der CCD-Zeile 8 empfängt vom dispersiven Element 7 Rückstreulicht einer jeweils zugehörigen Wellenlänge bzw. einer zugehörigen schmalen Spektrallinie. Der Beitrag jedes solchen Pixels zum Ausgangssignal 9 entspricht somit der rückgestreuten Lichtintensität bei der betreffenden Wellenlänge. Auf diese Weise vermag die Auswerteeinheit 10 für die verschiedenen Meßwellenlängen aus den Signalen der betreffenden Pixel der CCD-Zeile 8 die zugehörige Rückstreuintensität zu ermitteln. In Fig. 2 ist der weitere Auswertevorgang in Diagrammform idealisiert veranschaulicht.

Wie aus Fig. 2 zu erkennen, ermittelt die Auswerteeinheit 10 zunächst die Spektraldaten des rückgestreuten Lichtes in Form von Meßwerten der relativen spektralen Rückstreulichtintensität S, entsprechend dem Ausgangssignalbeitrag des jeweiligen CCD-Zeilenpixels, in Abhängigkeit von der Wellenlänge $\lambda$ für eine Mehrzahl von Meßpunkten entsprechend der Anzahl von CCD-Zeilenpixeln. Das System ist so ausgelegt, daß jeweils eine Mehrzahl von Meßpunkten M1, M2, M3 in einem von drei aufeinanderfolgenden Wellenlängenintervallen A, B, C liegt. Dabei schließt sich an einen vorgegebenen unteren Grenzwert $\lambda_{G1}$ unterhalb ein erstes Wellenlängenintervall A an, während sich oberhalb von diesem ein zweites Wellenlängenintervall B anschließt, das bis zu einem vorgegebenen oberen Grenzwert $\lambda_{G2}$ reicht, an den sich nach oben das dritte Wellenlängenintervall C anschließt. Die beiden Grenzwerte $\lambda_{G1}$, $\lambda_{G2}$ sind so gewählt, daß das von ihnen eingeschlossene Wellenlängenintervall B einen Wellenlängenbereich mit signifikanter Lichtabsorption durch Wasser oder Eis bzw. Schnee darstellt, während die beiden äußeren Wellenlängenintervalle A, C zwei Teilbereiche eines Wellenlängenbereiches bilden, in welchem das Licht durch Wasser oder Eis bzw. Schnee nicht merklich absorbiert wird. Eine derartige Situation ergibt sich beispielsweise durch eine Wahl des unteren Grenzwertes $\lambda_{G1}$ bei ungefähr 900nm und des oberen Grenzwertes $\lambda_{G2}$ bei ungefähr 1050nm, da dazwischen bekanntermaßen eine Absorptionslinie von Wasser/Eis liegt, während in einem an diesen unteren Grenzwert $\lambda_{G1}$ nach unten anschließenden und einem an diesen oberen Grenzwert $\lambda_{G2}$ nach oben anschließenden Bereich keine signifikante Absorption durch Wasser/Eis auftritt.

Die Auswerteeinheit 10 benutzt nun die Meßpunkte M1 und M3 in den beiden Teilbereichen des ersten Wellenlängenbereichs, d.h. desjenigen ohne signifikante Absorption durch Wasser/Eis dazu, eine Näherungs-Referenzkurve R für den Spektralverlauf des rückgestreuten Lichtes bei trockener Fahrbahn in Form einer Approximationskurve mittels eines üblichen Approximationsverfahrens zu ermitteln. Dazu wird eine mathematische Funktion, z.B. ein Polynom, mit einer vorgebbaren Anzahl freier Parameter vorgegeben, und die Parameter werden durch das Approximationsverfahren festgelegt. Wenn die Funktion eine Anzahl n von Parametern enthält und die Wasserhöhe als weitere unbekannte, zu bestimmende Größe vorgegeben wird, sind hierfür eine Anzahl n+1 von Meßkanälen, d.h. Meßpunkten M1, M3 im ersten Wellenlängenbereich, erforderlich. Im einfachsten Fall der Verwendung einer Geraden als Näherungs-Referenzkurve sind folglich mindestens drei Meßpunkte M1, M3 erforderlich. Vorzugsweise werden insgesamt wesentlich mehr Meßpunkte verwendet, z.B. zwischen 20 und 30 Meßpunkte M1, M2, M3 gleichmäßig verteilt über den gesamten beobachteten Wellenlängenbereich, d.h. über die drei Wellenlängenintervalle A, B, C. Wenn mehr Meßpunkte M1, M3 in den beiden Teilbereichen A, C des ersten Wellenlängenbereichs vorhanden sind als freie Parameter der vorgegebenen Funktion, ist das Gleichungssystem zur Bestimmung der Parameter überbestimmt, so daß in diesem Fall durch eine Ausgleichsrechnung eine an die Meßpunkte M1, M3 z.B. hinsichtlich des kleinsten quadratischen Fehlers bestangepaßte Lösung gefunden werden kann. Die Ermittlung der Näherungs-Referenzkurve in dieser Weise als eine Ausgleichskurve verringert den Einfluß von Signalrauschen und erhöht die Genauigkeit.

Ausgehend von ihrer Festlegung durch die Meßpunkte M1, M3 in den beiden Teilbereichen A, C des ersten Wellenlängenbereichs erstreckt sich die Näherungs-Referenzkurve R auch im zwischenliegenden zweiten Wellenlängenbereich B, in welchem sie folglich eine Interpolationskurve darstellt. Da die Näherungs-Referenzkurve R anhand der Meßpunkte M1, M3 des Wellenlängenbereichs ohne signifikante Wasser/Eis-Absorption bestimmt wurde, stellt sie im Wellenlängenbereich B mit signifikanter Wasser/Eis-Absorption eine Approximationskurve für den Fall einer trockenen Fahrbahnoberfläche dar und eignet sich somit als Referenz zur Feststellung von demgegenüber ggf. vorliegenden Abweichungen der in diesem Wellenlängenbereich B gemessenen Spektraldaten. So ist in Fig. 1 der Fall einer nassen Fahrbahn veranschaulicht, für welche die spektralen Rückstreuintensitäten im zweiten Wellenlängenbereich B, d.h. die Meßwerte der dortigen Meßpunkte M2, wegen teilweiser Absorption des Lichts aus diesem Wellenlängenbereich B durch das Wasser der Fahrbahnoberfläche merklich unterhalb der Näherungs-Referenzkurve R liegt. Der Abstand der zu den Meßpunkten M2 des zweiten Wellenlängenbereichs B gehörigen Meßwerte zur Näherungs-Referenzkurve R ist somit ein eindeutiges qualitatives und quantitatives Maß für das Vorhandensein von Wasser auf der bestrahlten Fahrbahnoberfläche. Von wesentlicher Bedeutung ist dabei, daß die solchermaßen erhaltene Differenz zwischen der Näherungs-Referenzkurve und den gemessenen spektralen Rückstreuintensitäten im Wellenlängenbereich mit signifikanter Wasser/Eis-Absorption unabhängig vom jeweils vorliegenden Fahrbahnbelag ist, d.h. von einem möglicherweise nicht für alle Wellenlängen konstanten spektralen Reflexionsvermögen der Fahrbahn unbeeinflußt bleibt. Dadurch liefert das Verfahren mit relativ geringem Aufwand deutlich bessere Resultate als Vorgehensweisen, die auf der Annahme beruhen, daß sich der Fahrbahnbelag als grauer Strahler verhält. Von Vorteil ist bei diesem Verfahren außerdem, daß es auch dann noch anwendbar ist, wenn das tatsächliche Absorptionsverhalten von einem exakten, einfachen Exponentialgesetz abweicht.

Statt einer nur punktuellen Auswertung dieser Differenz der gemessenen Spektraldaten von den Daten der Näherungs-Referenzkurve R im zweiten Wellenbereich B ist vorzugsweise eine noch genauere Auswertung derselben in kontinuerlicher Form durch die Auswerteeinheit 10 vorgesehen, die in Verbindung mit Fig. 3 erläutert wird. Dabei geht die Auswerteeinheit 10 so vor, daß sie die gemessenen Werte an den einzelnen Meßpunkten M1, M2, M3 aller beobachteten Wellenlängenintervalle A, B, C als Stützstellen einer kontinuerlichen Meßkurve M miteinander verbindet und die Differenzkurve zwischen der Näherungs-Referenzkurve R und der Meßkurve M berechnet. In Fig. 3 ist zum einen eine auf diese Weise berechnete Differenzkurve D1 dargestellt, die für den Fall einer nassen Fahrbahnoberfläche erhalten wurde. Zum anderen ist in Fig. 3 eine weitere Differenzkurve D2 wiedergegeben, die für den Fall einer vereisten Fahrbahnoberfläche erhalten wurde. Die Auswerteeinheit 10 wertet nun die jeweils erhaltene Differenzkurve D1, D2 weiter dahingehend aus, daß sie sowohl die Fläche F1, F2 unter der jeweiligen Differenzkurve D1, D2, d.h. das Integral derselben über die Wellenlänge $\lambda$, im Wellenlängenbereich mit signifikanter Wasser/Eis-Absorption, d.h. zwischen den beiden gewählten Grenzwerten $\lambda_{G1}$, $\lambda_{G2}$, als auch die Lage des Schwerpunkts L1, L2 der betreffenden Differenzkurve D1, D2 ermittelt.

Es zeigt sich nun, daß bei Vorhandensein von Eis oder Schnee die Schwerpunktlage der erhaltenen Differenzkurve gegenüber dem Vorhandensein von Wasser auf der Fahrbahnoberfläche verschoben ist. Im Beispiel von Fig. 3 liegt daher der Schwerpunkt L2 der auf einen Eisbelag zurückzuführenden Differenzkurve D2 bei einer höheren Wellenlänge als der Schwerpunkt L1 der auf einen Wasserbelag zurückzuführenden Differenzkurve D1. Spezieller haben Untersuchungen ergeben, daß sich die Schwerpunktlage der auf Absorption durch Wasser zurückzuführenden Differenzkurve mit abnehmender Wassertemperatur von kleineren zu größeren Wellenlängen hin verschiebt, daß jedoch die Schwerpunktlage der auf einen Eisbelag bei 0°C zurückzuführenden Differenzkurve deutlich gegenüber der Schwerpunktlage einer auf einen Wasserbelag bei 0°C zurückzuführenden Differenzkurve zu größeren Wellenlängen hin verschoben ist. Weiterhin Zeigen Untersuchungen, daß bei einem auf der Fahrbahnoberfläche vorhandenen Schneebelag die sich dann ergebende Differnzkurve in ihrer Lage derjenigen für Eisbelag, d.h. D2, ähnlich ist, jedoch geringere Amplitudenwerte besitzt. Auf diese Weise erlaubt das Verfahren zudem die Erkennung eines Schneebelags auf der Fahrbahnoberfläche und dabei insbesondere die Unterscheidung von einem Wasser- oder einem Eisbelag.

Verfahrensgemäß ist daher vorgesehen, einen Wellenlängen-Schwellwert etwa in der Mitte zwischen den Schwerpunktlagen dieser beiden Differenzkurven bei 0°C festzulegen und, nachdem während eines Meßvorgangs zur Zustandsbestimmung einer Fahrbahnoberfläche durch die Auswerteeinheit 10 die zugehörige Differenzkurve berechnet wurde, zunächst festzustellen, ob diese überhaupt eine merkliche Amplitude im relevanten Wellenlängenbereich mit signifikanter Wasser/Eis-Absorption aufweist. Ist dies nicht der Fall, wird richtigerweise auf einen trockenen Zustand der Fahrbahnoberfläche geschlossen. Wenn eine Differenzkurve mit merklicher Amplitude vorliegt, wie z.B. die Kurven D1 und D2 von Fig. 3, wird deren Schwerpunktlage ermittelt und festgestellt, ob diese unterhalb oder oberhalb des vorgegebenen Wellenlängen-Schwellwertes liegt. Im ersteren Fall ist auf einen vorhandenen Wasserbelag auf der Fahrbahnoberfläche zu schließen, in letzterem Fall ist die Absorption durch eine Vereisung oder einen Schneebelag der Fahrbahnoberfläche verursacht. Aus der genauen Lage des Differenzkurvenschwerpunktes im Fall eines Wasser- bzw. Eisbelags kann zudem auf die Temperatur des Wassers bzw. Eises geschlossen werden, da mit abnehmender Temperatur der Wasser- bzw. Eisschicht sich die Schwerpunktslage der Differenzkurve zu größeren Wellenlängenlängen hin verschiebt. Die Kenntnis der Temperatur der Wasser- bzw. Eisschicht gibt neben der Kenntnis der Schichtdicke wertvolle Hinweise, um die Gefahr durch Eisglätte einschätzen zu können. Ist auf der Fahrbahn Wasser vorhanden und nähert sich die Wassertemperatur dem Gefrierpunkt, so kann der Fahrer durch ein akustisches oder optisches Warnsignal rechtzeitig davor gewarnt werden, daß mit überfrierender Nässe zu rechnen ist.

Ergibt die Schwerpunktlage einen Eis/Schneebelag, wird durch eine Analyse der Differenzkurvenamplitude entschieden, ob es sich um einen Eis- oder einen Schneebelag handelt. Für den Fall von Schnee sieht die Differenzkurve nämlich ähnlich aus wie für Eis, jedoch mit geringerer Amplitude.

Aus der ermittelten Differenzkurve ist weitergehend auch eine quantitative Aussage über die Wasserschichtdicke möglich. Denn es zeigt sich, daß vor allem im Fall einer Wasserschicht auf der Fahrbahnoberfläche die von der zugehörigen Differenzkurve, wie der Kurve D1 von Fig. 3, eingeschlossene Fläche F1 ein eindeutiges Maß für die Dicke dieser Wasserschicht ist. Durch Berechnung des Integrals der Differenzkurve D1 im Wellenlängenbereich mit signifikanter Absorption durch Wasser, d.h. durch Bestimmung der Fläche F1 von Fig. 3, kann folglich die Dicke der erkannten Wasserschicht auf der Fahrbahnoberfläche verhältnismäßig genau ermittelt werden.

Bei Bedarf kann das Verfahren in vorteilhafter Weise dahingehend weitergebildet werden, daß mögliche Störeinflüsse durch Umgebungslicht kompensiert werden. Dabei erfolgt die Trennung zwischen Umgebungslicht und Sensorlicht aufgrund der spektralen Unterscheidungsmerkmale auf rein rechnerischem Wege. In Fig. 4 sind die typischen spektralen Verläufe im Infrarotbereich von Umgebungslicht (UL) und von Licht einer Lichterzeugungseinheit (SL) dargestellt. Messungen zeigen, daß sich das Umgebungslichtspektrum im Verlauf des Tages wenig ändert. Die ausgeprägten Unterschiede der Spektren (UL, SL) ermöglichen eine zuverlässige Anwendung des im folgenden beschriebenen Verfahrens.

Dazu werden zwei Referenzspektren aufgenommen, und zwar eines $S_1(\lambda)$ für Tageslicht bei abgeschalteter Lichterzeugungseinheit, d.h. ohne Sensorlicht und das andere $S_0(\lambda)$ bei fehlendem Umgebungslicht und aktivierter Lichterzeugungseinheit, jeweils für einen bestimmten Referenz-Fahrbahnbelag.

Messungen zeigen, daß sich der Verlauf des spektralen Reflexionsvermögens für verschiedene Fahrbahnbeläge in sehr guter Näherung durch monotone, stetig verlaufende Kurven beschreiben läßt, die durch Multiplikation mit einer geeigneten Funktion $P(\lambda, A, B, ...)$ mit bestimmten Parametern A, B, ... ineinander übergeführt werden können. Unter dieser Annahme ergibt sich das an einem beliebigen Fahrbahnbelag gemessene Rückstreulichtspektrum aus dem Produkt der parameterabhängigen Funktion $P(\lambda, A, B, ...)$ mit der Summe aus einem Bruchteil des ersten Referenzspektrums $S_0(\lambda)$ und einem Bruchteil des zweiten Referenzspektrums $S_1(\lambda)$.

Die so erhaltenen Funktion für das Rückstreulichtspektrum einer trockenen beliebigen Fahrbahn wird mit einem exponentiellen Absorptionsterm $T(\lambda, d) = \exp(-\alpha(\lambda)d)$ multipliziert, der die Lichttransmission einer Wasserschicht bestimmter Dicke d beschreibt, wobei $\alpha(\lambda)$ der wellenlängenabhängige Absorptionskoeffizient von Wasser bzw. Eis ist. Der Absorptionskoeffizient $\alpha(\lambda)$ hat einen bekannten Verlauf, welcher entweder in einem Speicher abgelegt sein kann oder bereichsweise durch analytische Funktionen, wie Gauß- oder Lorentzkurven angenähert werden kann. Da sich das Absorptionsspektrum bekanntermaßen mit sich dem Gefrierpunkt nähernden Temperaturen zu höheren Wellenlängen hin verschiebt, ist es vorteilhaft als weiteren anzupassenden Parameter in den Näherungskurven für $\alpha(\lambda)$ die Temperatur t einzuführen oder die Kurven für $\alpha(\lambda)$ auch nach der Temperatur zu parametrisiert abzulegen.

Um auch den Fall einer Wasserschicht auf Eis oder eines Eiswassergemisches erfassen zu können, könnte ein weiterer Parameter für den Eisanteil eingeführt werden, welcher festlegt in welchem Maß die Absorptionskurven von Wasser bzw. Eis in das mathematische Modell für den Absorptionsterm $T(\lambda)$ eingehen.

Insgesamt ergibt sich eine mathematische Funktion für den wellenlängenabhängigen Verlauf der Rückstreuintensität der Form:

$$S(\lambda) = (a\, S_0(\lambda) + b\, S_1(\lambda))\, P(\lambda, A, B, C...)\, T(\lambda, d, t),$$

a und b sind hierbei die Anteile des Sensorlichts bzw. des Umgebungslichts, wobei $a + b = 1$ gilt. Auf einen Parameter für den Eisanteil wurde hier der Einfachheit halber verzichtet.

Eine vereinfachte Auswertung bietet sich an, wenn der Bruchteilsfaktor a/b und die parameterabhängige Funktion P in einem Wellenbereich ohne signifikante Wasser/Eis-Absorption bestimmt werden. In den Wellenlängenbereichen ohne signifikante Wasserabsorption ist die Transmission $T(\lambda, d) = 1$ und die obige Gleichung für die Rückstreuintensität vereinfacht sich zu:

$$S(\lambda) = (a\, S_0(\lambda) + b\, S_1(\lambda))\, P(\lambda, A, B, C...)$$

Diese Gleichung muß für alle Wellenlängen aus den Bereichen ohne Wasserabsorption erfüllt sein. Mit ausreichend vielen Meßpunkten im Wellenlängenbereich ohne signifikante Wasser/Eis-Absorption lassen sich die Parameter a, b, A, B, C... so bestimmen, daß die Quadratsumme der Abweichungen zur gemessenen Spektralkurve $S(\lambda)$ über alle Wellenlängen minimal ist. Durch diese Ausgleichsrechnung wird die am besten aproximierende, parameterabhängige Funktion P sowie der Bruchteilsfaktor a/b errechnet, mit dem die beiden Referenzspektren zur oben genannten Summe beitragen.

Da nun alle Parameter bekannt sind, läßt sich die Funktion $P(\lambda, A, B, C...)$ in den Bereich hinein interpolieren, in dem Absorption stattfindet. Mit dieser Kalibrierung des Meßsystems können die Rückstreuintensitäten für Meßpunkte im Wellenlängenbereich mit signifikanter Wasser/Eis-Absorption bei trockenem Fahrbahnoberflächenzustand als Interpolations- bzw. Extrapolationspunkte angegeben werden. Diese interpolierte Kurve entspricht der Messkurve für eine trockene Fahrbahn und damit der bereits eingeführten Näherungs-Referenzkurve.

In Anwendung des erfindungsgemäßen Auswerteverfahrens wird dann mit den Messwerten im Bereich mit Absorption durch Wasser/Eis die Differenzkurve gebildet. Aus der Größe der Differenzfläche und der Lage des Schwerpunkts kann, wie bereits dargestellt, die Wasserhöhe, die Wassertemperatur und das Vorhandensein von Eis ermittelt werden.

Zur Unterstützung des Verfahrens der Trennung zwischen Umgebungslicht und Sensorlicht können auch die Signale eines Umgebungslichtsensors verwendet werden, wie er in Fahrzeugen bereits verwendet wird, oder eines Sensors, der die Farbtemperatur des Umgebungslichts bestimmt, wie er aus WO 97/27077 bekannt ist. Solche Sensoren werden in Fahrzeugen zur automatischen Lichteinschaltung bei Dunkelheit und Schlechtwetter eingesetzt. Mittels eines Umgebungslichtsensors kann der Bruchteilsfaktor a/b laufend sensoriell ermittelt und in die oben ausgeführten Auswertung eingespeist werden.

Neben dem oben detailliert beschriebenen Verfahrensbeispiel und der dieses durchführenden Vorrichtung sind zahlreiche weitere erfindungsgemäße Ausführungsformen realisierbar. So kann z.B. ein System des Typs verwendet werden, wie er in der oben erwähnten DE 41 33 359 A1 beschrieben ist, wobei jedoch mindestens drei Spektralkanäle bereitgestellt werden. Die einzelnen Wellenlängen werden dann wiederum durch Interferenzfilter vor den Photoempfängern selektiert. Dann wird der wellenlängenabhängige Streukoeffizient der Fahrbahnoberfläche mit einer mathematischen Funktion mit freien Parametern angesetzt und diese Funktion mit einem exponentiellen Absorptionsterm, der die Lichttransmission einer Wasserschicht bestimmter Dicke beschreibt, multipliziert, um eine mathematische Funktion für den wellenlängenabhängigen Verlauf der Rückstreuintensität zu erhalten. Anhand der tatsächlichen Meßwerte können dann die freien Parameter der Funktion wieder im Sinne einer bestmöglichen Approximation errechnet werden, woraus sich zudem die Dicke der Wasserschicht ergibt.

Bei einer Variante des soeben beschriebenen Systems werden anstelle von Interferenzfiltern Photodioden eingesetzt, die eine unterschiedliche spektrale Empfindlichkeit aufweisen, z.B. aus Si, Ge oder In, Ga, As, oder deren spektrale Empfindlichkeit durch breitbandige Filter modifiziert wird. Die von einem solchen Detektor insgesamt umgewandelte Lichtintensität ergibt sich dann als Integral einer Produktfunktion über die Wellenlänge, wobei sich die Produktfunktion als Produkt der spektralen Empfindlichkeit des Photodetektors, eines exponentiellen Absorptionsterms und der oben erwähnten, den wellenlängenabhängigen Streukoeffizient der Fahrbahnoberfläche beschreibenden Funktion mit freien Parametern ergibt. Durch Verwenden mehrerer Detektoren mit voneinander linear unabhängigen spektralen Empfindlichkeitsverläufen in Abhängigkeit von der Wellenlänge erhält man dann wiederum ein Gleichungssystem, aus dem die freien Parameter und die Wasserdicke bestimmt werden können. Vorzugsweise ist auch hier wieder die Anzahl der Meßpunkte größer als die Anzahl von Detektoren, so daß das Gleichungssystem überbestimmt ist und durch eine Ausgleichsrechnung der Einfluß des Signalrauschens verringert und die Genauigkeit erhöht werden kann.

Bei einer weiteren Variante des oben angesprochenen Systems mit Interferenzfiltern werden für die Lichterzeugungseinheit schmalbandige Lichtquellen bei verschiedenen Wellenlängen verwendet, die im Zeitmultiplexverfahren angesteuert werden, z.B. Laserdioden. Als Empfänger wird eine breitbandige Photodiode verwendet, und die Signalauswertung erfolgt wie oben zum System mit Interferenzfiltern beschrieben.

Eine weitere Variante arbeitet entsprechend dem oben angesprochenen, Photodioden verwendenden System, wobei jedoch für die Lichterzeugungseinheit breitbandige Lichtquellen mit unterschiedlichen spektralen Verteilungen eingesetzt werden, die im Zeitmultiplexverfahren angesteuert werden, z.B. Leuchtdioden. Als Empfänger wird eine breitbandige Photodiode verwendet, und die Auswertung erfolgt wie oben für das System mit verschiedenen Photodioden beschrieben.

**Patentansprüche**

1. Verfahren zur Bestimmung des Zustands einer Fahrbahnoberfläche, bei dem

   - auf die Fahrbahnoberfläche Licht eingestrahlt wird, das einen ersten Lichtanteil aus einem ersten Wellenlängenbereich (A, C) ohne signifikante Absorption durch Wasser/Eis und einen zweiten Lichtanteil aus einem zweiten Wellenlängenbereich (B) mit signifikanter Absorption durch Wasser/Eis beinhaltet,
   - der erste Lichtanteil Licht mehrerer unterschiedlicher Wellenlängen enthält und das von der Fahrbahnoberfläche rückgestreute Licht erfaßt und spektral ausgewertet wird, indem eine Näherungs-Referenzkurve (R) für den Spektralverlauf des rückgestreuten Lichtes bei trockener Fahrbahn anhand der Spektraldaten des erfaßten, rückgestreuten Lichts ermittelt wird und aus der ermittelten Differenz zwischen den Spektraldaten des sich aus dem zweiten Lichtanteil ergebenden, zweiten Rückstreulichtanteils und den entsprechenden Daten der Näherungs-Referenzkurve für wenigstens eine Wellenlänge des zweiten Wellenlängenbereichs (B) auf den Zustand der Fahrbahnoberfläche geschlossen wird,

   **dadurch gekennzeichnet, daß**
   der zweite Lichtanteil Licht mehrerer unterschiedlicher Wellenlängen enthält und die Differenz zwischen den Spektraldaten des zweiten Rückstreulichtanteils und den entsprechenden Näherungs-Referenzkurvendaten als Differenzkurve (D1, D2) zwischen der gemessenen Spektralkurve (M) des rückgestreuten Lichtes und der Näherungs-Referenzkurve (R) im zweiten Wellenlängenbereich (B) ermittelt und aus dem Verlauf der Differenzkurve auf den Zustand der Fahrbahnoberfläche geschlossen wird.

2. Verfahren nach Anspruch 1, weiter
   **dadurch gekennzeichnet, daß**
   der erste und der zweite Lichtanteil des auf die Fahrbahn eingestrahlten Lichtes im Wellenlängenbereich zwischen etwa 800nm und etwa 1150nm liegen.

3. Verfahren nach Anspruch 1 oder 2, weiter
   **dadurch gekennzeichnet, daß**
   der erste Wellenlängenbereich aus zwei Teilbereichen (A, C) besteht, von denen der eine unterhalb und der andere oberhalb des zweiten Wellenlängenbereichs (B) liegt.

4. Verfahren nach einem der Ansprüche 1 bis 3, weiter
   **dadurch gekennzeichnet, daß**
   das Integral der Differenzkurve (D1) über den zweiten Wellenlängenbereich (B) ermittelt und als Maß für die Dicke eines auf der Fahrbahnoberfläche gebildeten Wasserfilms herangezogen wird.

5. Verfahren nach einem der Ansprüche 1 bis 4, weiter
   **dadurch gekennzeichnet, daß**

der Schwerpunkt (L1, L2) der Differenzkurve (D1, D2) über den zweiten Wellenlängenbereich (B) ermittelt und aus dessen Lage zwischen Wasser oder Eis/Schnee auf der Fahrbahnoberfläche unterschieden wird.

6. Verfahren nach Anspruch 5, weiter
**dadurch gekennzeichnet, daß**
aus der Lage des Schwerpunktes auf die Temperatur des Belags von Wasser beziehungsweise Eis/Schnee auf der Fahrbahnoberfläche geschlossen wird.

7. Verfahren nach Anspruch 6, weiter
**dadurch gekennzeichnet, daß**
wenn Wasser auf der Fahrbahn erkannt und auf eine Temperatur des Wassers in der Nähe des Gefrierpunktes geschlossen wird, eine Warnung an den Fahrer ausgegeben wird, daß mit überfrierender Nässe zu rechnen ist.

8. Verfahren nach Anspruch 5, weiter
**dadurch gekennzeichnet, daß**
wenn Eis/Schnee auf der Fahrbahnoberfläche erkannt wird, durch Auswertung der Amplitude der Differenzkurve zwischen Eis und Schnee unterschieden wird.

9. Verfahren nach Anspruch 1, weiter
**dadurch gekennzeichnet, daß**
zur Bestimmung der Näherungs-Referenzkurve (R)

- das Rückstreulichtspektrum einer trockenen Fahrbahn angesetzt wird als eine parameterabhängige, wellenlängenabhängige Funktion $P(\lambda, A, B, ...)$ multipliziert mit der Summe aus einem Bruchteil eines ersten Referenzspektrums $S_0(\lambda)$ und einem Bruchteil eines zweiten Referenzspektrums $S_1(\lambda)$, wobei das erste Referenzspektrum $S_0(\lambda)$ bei fehlendem Umgebungslicht und aktivierter Lichterzeugungseinheit und das zweite Referenzspektrum $S_1(\lambda)$ für Tageslicht bei abgeschalteter Lichterzeugungseinheit jeweils für einen bestimmten Referenz-Fahrbahnbelag aufgenommen wurden und
- aus der gemessenen Spektralkurve (M) des rückgestreuten Lichtes im ersten Wellenlängenbereich (A, C) die freien Parameter der Funktion P und der Bruchteilsfaktor, mit dem die beiden Referenzspektren beitragen, im Sinne einer bestmöglichen Approximation errechnet werden.

10. Verfahren nach Anspruch 9, weiter
**dadurch gekennzeichnet, daß**
der Bruchteilsfaktor zumindest zeitweise mittels eines Umgebungssensors laufend sensoriell ermittelt und in die Auswertung eingespeist wird.

Fig. 1

Fig. 2

Fig. 3

Fig. 4